# EUROPEAN PATENT SPECIFICATION

(11) **EP 3 171 556 B1**
(45) Date of publication and mention of the grant of the patent: **17.07.2019**
(21) Application number: 14881540.0
(22) Date of filing: 23.09.2014
(51) Int. Cl.: H04L 12/741

(54) **METHOD AND APPARATUS FOR SETTING NETWORK RULE ENTRY**
VERFAHREN UND VORRICHTUNG ZUR EINSTELLUNG EINER NETZWERKREGELEINGABE
PROCÉDÉ ET APPAREIL DE RÉGLAGE D'ENTRÉE DE RÈGLE RÉSEAU

(30) Priority: 18.07.2014 CN 201410346378
(43) Date of publication of application: 24.05.2017
(73) Proprietor: ZTE Corporation, Shenzhen, Guangdong 518057 (CN)
(72) Inventor: WEI, Zhifeng, Shenzhen Guangdong 518057 (CN)
(74) Representative: Savi, Massimiliano
(86) International application number: PCT/CN2014/087229
(87) International publication number: WO 2015/117337

(56) References cited:
- CN-A- 102 104 512
- CN-A- 103 532 852
- CN-A- 103 812 770
- US-A1- 2012 311 693
- US-A1- 2014 089 523
- Anonymous: "Use host names in firewall rules - MikroTik Wiki", , 4 September 2012 (2012-09-04), pages 1-3, XP055379203, Retrieved from the Internet: URL:https://wiki.mikrotik.com/wiki/Use_hos t_names_in_firewall_rules [retrieved on 2017-06-07]

## Description

### Technical Field

The present document relates to the field of communication, and in particular to a method and apparatus for setting a network rule entry.

### Background

In the related art, the routing control is realized most by a mode of configuring a policy routing of an IP address or an address field. The routing is a process that a router receives a data packet from an interface, orients and forwards it to another interface based on the destination address of the data packet.

In the relevant art, the routing is controlled by adopting a mode through configuring a static route of the IP address or the address field or setting an iptables rule. The iptables is an IP information packet filtering system integrated with a Linux kernel, which is established based on a netfilter architecture and manages flow of a network packet and a forwarding action by configuring "rule" through an iptables command.

In the above mode, the control device needs to know the IP addresses of all the websites requiring control of the routing, and selects an appropriate policy to set a single IP address or an address field. However, the IP address of the website will dynamically be increased or changed, and needs to be reset continuously in the situation of configuring a fixed IP address or an address field as a static routing or an IP table rule, and there is a situation that the update is not in time.

Aiming at the problem how to set the network rule entry, there is no effective solution proposed till now.

The document "Use host names in firewall rules - Mikro Tik Wiki", 4 Sep. 2012, pages 1-3, XP055379203 discloses creating firewall filter rules which refer to host names rather than IP addresses.

The document US 2012/311693 A1 discloses a host rule mapping module in a firewall server may receive an update notification from a name server. The update notification may indicate a change to an address associated with a host name of a host machine. In response to receiving the update notification, the host rule mapping module may request a record corresponding to the host name identified in the update notification.

### Summary

The invention is defined by the subject matter of the independent claims. Advantageous enhancements are subject to the dependent claims.

The present document provides a method and apparatus for setting a network rule entry aiming at the problem how to set the network rule entry, in order to solve the above problem at least.

A method for setting a network rule entry is provided according to one embodiment of the present document, including: detecting, by a first device, whether a first domain name which is requested to resolve by a domain name resolution request of a second device is matched with a preset second domain name, herein the second device is a device which is mounted beneath the first device; acquiring, by the first device, an IP address corresponding to the first domain name from a response of the resolution request when the first domain name is matched with the second domain name; and setting, by the first device, an IP address in a rule entry corresponding to the second domain name as the IP address corresponding to the first domain name.

Preferably, the second domain name is composed of a wildcard character and a sub-domain name.

Preferably, the rule entry includes a rule for selecting a network path.

Preferably, the network path is a wide area network (referred to as WAN) connection used for forwarding a data packet.

Preferably, after the first device sets the IP address in the rule entry corresponding to the second domain name as the IP address corresponding to the first domain name, the method further includes: receiving, by the first device, a network access request of the second device, herein, the network access request carries an IP address to be accessed; searching, by the first device, for a rule entry corresponding to the IP address to be assessed; and when the rule entry corresponding to the IP address to be accessed is found, controlling, by the first device, network access according to the found rule entry.

Preferably, controlling, by the first device, the network access according to the found rule entry includes: selecting, by the first device, a specified WAN connection and sending a data packet according to the found rule entry.

An apparatus for setting a network rule entry is provided according to another embodiment of the present document, located in a first device, including: a detection module, arranged to: detect whether a first domain name which is requested to resolve by a domain name resolution request of a second device is matched with a preset second domain name, herein the second device is a device which is mounted beneath the first device; an acquiring module, arranged to: acquire an IP address corresponding to the first domain name from a response of the resolution request when the first domain name is matched with the second domain name; and a setting module, arranged to set an IP address in a rule entry corresponding to the second domain name as the IP address corresponding to the first domain name.

Preferably, the second domain name is composed of a wildcard character and a sub-domain name.

Preferably, the rule entry includes a rule for selecting a network path.

Preferably, the network path is a WAN connection used for forwarding a data packet.

Preferably, the above apparatus further includes: a receiving module, arranged to: receive a network access request of the second device, herein, the network access request carries an IP address to be accessed; a searching module, arranged to: search for a rule entry corresponding to the IP address to be assessed; and a controlling module, arranged to: when the rule entry corresponding to the IP address to be accessed is found, control network access according to the found rule entry.

Preferably, the controlling module is further arranged to select a specified WAN connection and send a data packet according to the found rule entry.

Through the present document, the first device detects whether the first domain name which is requested to resolve by a domain name resolution request of the second device which is mounted beneath the first device is matched with a preset second domain name; the first device acquires an IP address corresponding to the first domain name from a response of a resolution request when the first domain name is matched with the second domain name; and sets an IP address in a rule entry corresponding to the second domain name as the IP address corresponding to the first domain name. Because the first device acquires the IP address corresponding to the domain name from the response of the resolution request, there is no need to know the IP addresses of all the websites in advance, and when the IP address of the website is changed, the rule entry can be updated in time.

### Brief Description of Drawings

The accompanying drawings described herein are used to provide further understanding for the present document and constitute a part of the present application. The illustrated embodiments of the present document and the description thereof are used to explain the present document, rather than constituting an inappropriate limitation to the present document. Herein:
FIG. 1 is a flow chart of a method for setting a network rule entry according to an embodiment of the present document;
FIG. 2 is a schematic diagram of networking according to the related art;
FIG. 3 is a flow chart of setting a wildcard character of the domain name and data forwarding and routing according to an embodiment of the present document;
FIG. 4 is a flow chart of network access according to an embodiment of the present document; and
FIG. 5 is a structure block diagram of an apparatus for setting a network rule entry according to an embodiment of the present document.

### Preferred Embodiments of the Present Document

The present document is described in detail with reference to the accompanying drawings and in combination with embodiments hereinafter. It should be illustrated that, in the case of not conflicting, the embodiments in the present application and features in these embodiments can be combined with each other.

The domain name system (referred to as DNS) is a distributed database for the domain name and the IP address mapping to each other on the Internet, which enables the user more easily access the Internet, without having to remember the IP address which can be directly read by the machine. The process of finally obtaining the IP address corresponding to the host name through the host name is called the domain name resolution (or host name resolution). The domain name resolution usually needs to be done by a dedicated DNS server. The DNS protocol runs on the user datagram protocol (referred to as UDP), the port number which is typically used is 53. In the RFC document, the DNS is described in the RFC2181 specification, the dynamic update of the DNS is described in the RFC2136, and the reverse cache of the DNS query is described in the RFC 2308.

In general, when the application process needs to map one host domain name to an IP address, a domain name resolution function may be called, and the resolution function puts the domain name to be converted in a domain name resolution request and sends to a local domain name server in a UDP message mode. After the local domain name server finds the domain name, the corresponding IP address is put in a reply message and returned. At the same time, the domain name server must also have the information to connect to other servers in order to support the forwarding when being unable to resolve. If the domain name server cannot answer the request, then the domain name server will become another customer of the DNS temporarily, and sends the resolution request to the root domain name server, and the root domain name server must be able to find the domain name servers of all the beneath sub-domain name servers; by that analogy in this way, it is resolved all the way down till that the requested domain name is found.

There are multiple network paths in the communication system, for example, public network and private network, and the public network refers to the Internet which provides various network services. The private network is a dedicated network, which is a network set up to meet the requirements of special service and service quality. Because of the relative isolation of this network with the external network and the small interference, it can provide high quality service. As an example of network control, the path for accessing the network can be selected according to the domain name; for example, accessing the network through a public network or through a private network. However, the embodiment of the present document is not limited to this.

In the embodiment of the present document, different rule entries can be set regarding to different domain names, so as to realize the control of the network access. It can be expected that the method and the apparatus of the following embodiment can be achieved by a computer program unit, the device in the following embodiment can be any device, the device can include a processor and a memory, the above computer program unit can be stored in the memory, and the processor can execute the computer program unit.

The embodiment of the present document is described hereinafter.

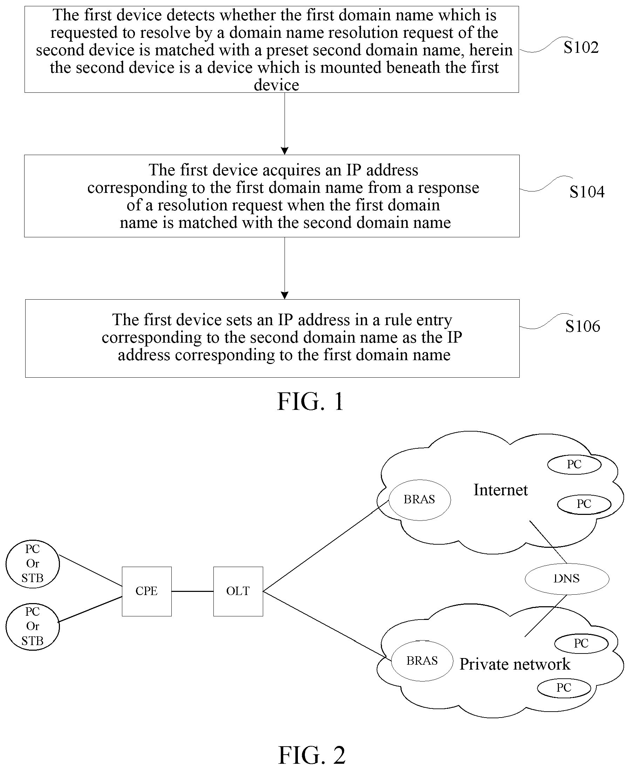

FIG. 1 is a flow chart of a method for setting a network rule entry according to an embodiment of the present document. As shown in FIG. 1, the method includes step S102 to step S106.

In step S102, the first device detects whether the first domain name which is requested to resolve by a domain name resolution request of the second device is matched with a preset second domain name, herein the second device is a device which is mounted beneath the first device.

Preferably, in the embodiment of the present document, multiple second domain names can be arranged in advance to realize the network access control of the multiple second domain names.

Preferably, the above second domain name is composed of the wildcard character and the sub-domain name, for example, *.abc.com, so as to realize the control of all domain names including the domain name of .abc.com.

Preferably, when it is judged whether the first domain name is matched with the second domain name, it can be judged whether the part except the wildcard characters of the first domain name and the part except the second domain name are matched; for example, the first domain name is xyz.abc.com and the second domain name is *.abc.com; the part except the wildcard characters, that is, the part of .abc.com, can be judged whether to be consistent during the judgment.

In S104, the first device acquires an IP address corresponding to the first domain name from a response of a resolution request when the first domain name is matched with the second domain name.

Preferably, the first device can monitor the response of the above resolution request, and acquire the IP address corresponding to the first domain name from the response when the response is monitored, and the IP address is carried in the response.

In S106, the first device sets an IP address in a rule entry corresponding to the second domain name as the IP address corresponding to the first domain name.

Preferably, the rule entry can be set for the domain name to be controlled (that is, the second domain name). The second device uses an IP address corresponding to the second domain name at the opposite end when accessing the network, so the relationship between rule entry and the IP address is established. The IP address acquired in the above step S104 is the IP address corresponding to the second domain name, the acquired IP address can be written into the rule entry corresponding to the corresponding second domain name, thus the corresponding relationship between the IP address of the second domain name with the rule entry is established.

Preferably, the above rule entry includes a rule for selecting a network path. Preferably, the network path is a wide area network (referred to as WAN) connection used for forwarding a data packet, and the WAN can include but not limited to the above public network and private network.

After the above step S106, the first device can receive a network access request of the second device, herein, the network access request carries an IP address to be accessed; the first device searches for a rule entry corresponding to the IP address to be assessed; and when the rule entry corresponding to the IP address to be accessed is found, the first device controls network access according to the found rule entry. Preferably, the first device can select a specified WAN connection and send a data packet according to the found rule entry.

Through the embodiment of the present document, the first device detects whether the first domain name which is requested to resolve by a domain name resolution request of the second device which is mounted beneath the first device is matched with a preset second domain name; the first device acquires an IP address corresponding to the first domain name from a response of a resolution request when the first domain name is matched with the second domain name, and sets an IP address in a rule entry corresponding to the second domain name as the IP address corresponding to the first domain name. Because the first device acquires the IP address corresponding to the domain name from the response of the resolution request, there is no need to know the IP addresses of all the websites in advance, and when the IP address of the website is changed, the rule entry can be updated in time.

The above method provided by the embodiment of the present document is described by taking the home gateway as an example hereinafter.

In the embodiment of the present document, it can be achieved to configure the rule entry automatically according to the result of the domain name resolution, and to search for the corresponding route according to the target IP when the network service data are forwarded, to realize the routing control.

In the embodiment of the present document, the home gateway (corresponding to the above first device) configures a domain name wildcard character white list (corresponding to the above preset second domain name) by a routing mode and associates a network plane, the beneath mounted device of the home gateway (corresponding to the above second device) first issues an DNS resolution request when initiating the access of the network service; if the DNS domain name is in the configured domain name wildcard character white list, then the resolution IP address of the resolution result of the DNS is intercepted, and the IP address is configured with corresponding rule entry.

After the service access to the resolved IP address initiated by the beneath mounted device reaches the home gateway, the home gateway first searches for the rule entry according to the destination address, which can use the HASH retrieval method to improve the efficiency in the embodiment of the present document. After the home gateway query is matched, the message is marked and a specified network plane is selected for routing.

In the embodiment of the present document, according to the domain name wildcard character mode, it does not require to exhaust all IP addresses to configure as the static routing, which can also be automatically adapted when the IP address is increased corresponding to the newly-increased service of the website, and the flexibility and applicability of the processing are increased. Corresponding to the mode of configuring the IP table rule (the retrieval method is sequential searching), the HASH retrieval can improve the retrieval performance.

The embodiment of the present document is described by combining with network in FIG. 2 hereinafter.

FIG. 2 is a schematic diagram of networking according to the related art. As shown in FIG. 2, the networking of the network in the embodiment of the present document, there are two networks in the network, one network plane is the Internet network, and the other is the private network; herein, the user side device (Customer Premise Equipment, referred to as CPE) is the home gateway, to which a personal computer (referred to as PC) or a set-top box is beneath mounted, and the home gateway can be connected to the two network planes, and distributes the addresses respectively through the broadband remote server (referred to as BRAS) of the two network planes. The two network planes share the DNS resolution server, that is, the device mounted beneath the home gateway initiates the DNS request, and can complete the DNS resolution through the Internet plane or the private network plane.

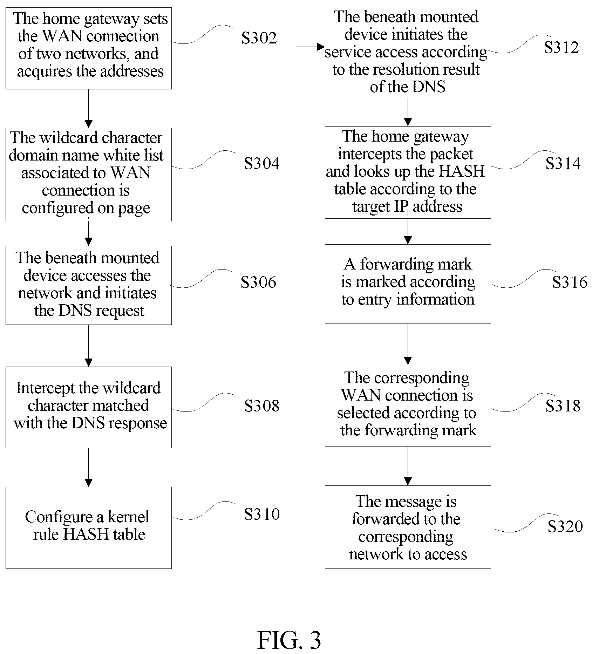

FIG. 3 is a flow chart of setting a wildcard character of the domain name and data forwarding and routing according to an embodiment of the present document. As shown in FIG. 3, step S302 to step S320 are included.

In step S302, the home gateway sets the WAN connection of two networks, and acquires the addresses.

In step S304, the home gateway sets the domain name wildcard character white list through the WEB page or other modes.

For example, the *.souhu.com is set to control accessing to all domain names of the Sohu website which end with souhu.com, and the *.qq.com is set to control accessing to all domain names of the Tencent website which end with qq.com.

In step S306, the beneath mounted device accesses the network and initiates the DNS resolution request.

When the device beneath mounted to the home gateway initiates the access and initiates the DNS resolution request to the DNS Server, the DNS Server returns a resolution response.

In step S308, the home gateway intercepts the DNS response message.

In the above step S308, the home gateway matches the set wildcard character domain name according to the request content in the message, and the matching method is right matching after removing the wildcard character "*" (for example: for accessing the Sohu video, the requested DNS domain name is tv.sohu.com which is matched with the entry *.souhu.com).

In step S310, when the matching is successful, the resolution result, the IP address, in the DNS response message is configured to a kernel rule table.

In order to improve the retrieval efficiency, the kernel rule table is established by adopting the HASH table, and the kernel rule HASH table is composed by the fields, such as, a target IPv4/IPv6 address or address field, a protocol type, a forwarding symbol (a MARK value corresponding to a WAN connection), a using sign, an entry status, counting of packet receiving and transmission, etc.

In step S312, the device beneath mounted to the home gateway initiates the access according to the resolution result of the DNS.

In step S314, the home gateway intercepts the packet and looks up the HASH table according to the target IP address.

In step S316, after the message reaches the home gateway, the kernel rule table is first looked up, and if the retrieval is successful, then one field, SKB, of the message is marked with a forwarding mark in queried rule entry information.

The message continues to be processed later in the Linux protocol stack, the mark is judged for selecting the policy routing when the route is searched, it is controlled to issue by the specified WAN connection, and thus the data packet is forwarded to the corresponding network plane.

In step S318, the corresponding WAN connection is selected according to the forwarding mark.

In step S320, the message is forwarded to the corresponding network to access.

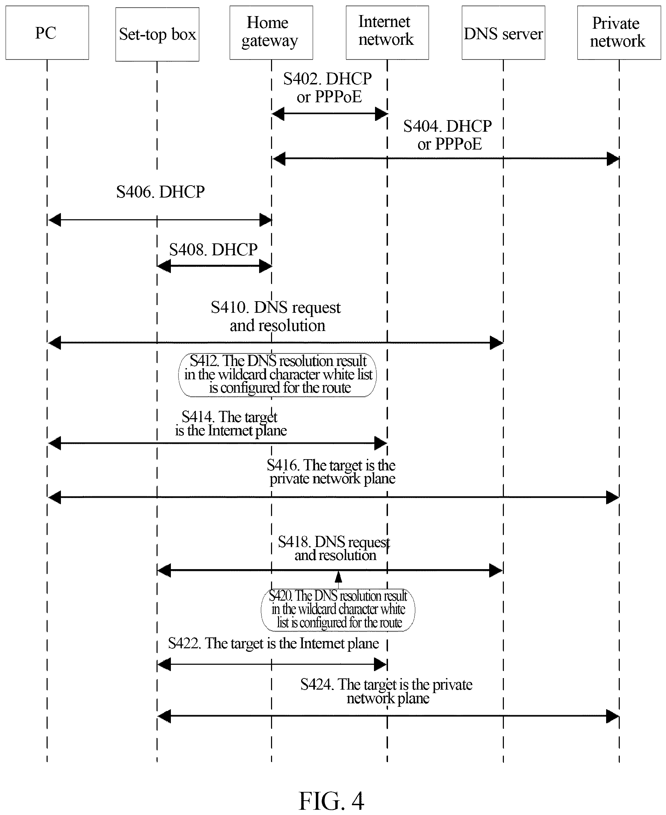

FIG. 4 is a flow chart of network access according to an embodiment of the present document. As shown in FIG. 4, the method includes step S402 to step S424.

In step S402, the home gateway establishes the WAN connection, acquires the address from the Internet plane through the DHCP mode or PPPoE dial-up mode, configures the routing, and establishes the Internet plane channel.

In step S404, the home gateway acquires the address from the private network plane, acquires the address from the private network plane through the DHCP mode or the PPPoE dial-up mode, configures the routing, and establishes the private plane channel.

In step S406, the device, PC, beneath mounted to one LAN port of the home gateway acquires a small network address (192.168.1.x) from the home gateway.

In step S408, the device, set-top box, beneath mounted to another LAN port of the home gateway acquires the small network address (192.168.1.x) from the home gateway.

In step S410, the device PC beneath mounted to the home gateway performs the network service access, which first initiates the DNS domain name resolution request, and the DNS Server returns the resolution result.

In step S412, the domain name wildcard character processing module intercepts the DNS resolution result in step 205, and configures the corresponding IP address in the DNS resolution result into the kernel rule table as the rule entry to be used for the later access query and routing setting, after the resolved domain name is matched with the entry in the wildcard character white list.

In step S414, the device PC beneath mounted to the home gateway accesses the Internet plane, and initiates the access according to the resolution result; the home gateway retrieves the kernel rule table through the HASH method after the message reaches the home gateway, and forwards to the Internet network plane according to the WAN connection of the specified network plane (Internet) in the entry after the retrieval is successful.

In step S416, the device PC beneath mounted to the home gateway accesses the private network plane, and initiates the access according to the resolution result; the home gateway retrieves the kernel rule table through the HASH method after the message reaches the home gateway, and forwards it to the private network plane according to the WAN connection of the specified network plane (the private network) in the entry after the retrieval is successful.

In step S418, the device, set-top box, beneath mounted to the home gateway performs the network service access, which first initiates the DNS domain name resolution request, and the DNS Server returns the resolution result.

In step S420, the domain name wildcard character processing module intercepts the DNS resolution result in step 205, and after the resolved domain name is matched with the entry in the wildcard character white list, the corresponding IP address in the DNS resolution result is configured into the kernel rule table as the rule entry to be used for the later access query and routing setting.

In step S422, the device, set-top box, beneath mounted to the home gateway accesses the Internet plane, and initiates the access according to the resolution result; the home gateway retrieves the kernel rule table through the HASH method after the message reaches the home gateway, and forwards to the Internet network plane according to the WAN connection of the specified network plane (Internet) in the entry after the retrieval is successful.

In step S424, the device, set-top box, beneath mounted to the home gateway accesses the private network plane, and initiates the access according to the resolution result; the home gateway retrieves the kernel rule table through the HASH method after the message reaches the home gateway, and forwards to the private network plane according to the WAN connection of the specified network plane (the private network) in the entry after the retrieval is successful.

The apparatus for setting the network rule entry according to the embodiment of the present document is described hereinafter.

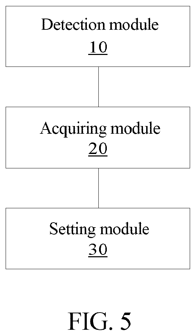

FIG. 5 is a structure block diagram of an apparatus for setting a network rule entry according to an embodiment of the present document. The apparatus is located in the first device, including the following, as shown in FIG. 5. a detection module 10, arranged to: detect whether a first domain name which is requested to resolve by a domain name resolution request of a second device is matched with a preset second domain name, herein the second device is a device which is mounted beneath the first device; an acquiring module 20, arranged to acquire an IP address corresponding to the first domain name from a response of a resolution request when the first domain name is matched with the second domain name; and a setting module 30, arranged to set an IP address in a rule entry corresponding to the second domain name as the IP address corresponding to the first domain name.

Preferably, the above apparatus can further include: a receiving module, arranged to: receive a network access request of the second device, herein, the network access request carries an IP address to be accessed; a searching module, arranged to: search for a rule entry corresponding to the IP address to be assessed; and a controlling module, arranged to: when the rule entry corresponding to the IP address to be accessed is found, control network access according to the found rule entry.

Preferably, the controlling module is further arranged to select a specified WAN connection and send a data packet according to the found rule entry.

Other parts of the present device refer to the above description of the embodiment of the present document, and will not go into details here.

From the above descriptions, it can be seen that the embodiment of the present document realizes the technical effects as follows:
the first device detects whether the first domain name which is requested to resolve by a domain name resolution request of the second device which is mounted beneath the first device is matched with a preset second domain name; the first device acquires an IP address corresponding to the first domain name from a response of a resolution request when the first domain name is matched with the second domain name; and sets an IP address in a rule entry corresponding to the second domain name as the IP address corresponding to the first domain name. Because the first device acquires the IP address corresponding to the domain name from the response of the resolution request, there is no need to know the IP addresses of all the websites in advance, and when the IP address of the website is changed, the rule entry can be updated in time.

Obviously, it can be understood by those skilled in the art that each module or each step above-mentioned in the present document can be implemented by the universal calculating apparatus, and they can be integrated in a single calculating apparatus, or distributed in the network made up by a plurality of calculating apparatus. Preferably, they can be implemented by the executable program codes of the calculating apparatus. Accordingly, they can be stored in the storage apparatus and implemented by the calculating apparatus, and in some situation, the shown or described steps can be executed according to a sequence different from this place, or they are made to each integrated circuit module respectively, or a plurality of modules or steps therein are made into the single integrated circuit module to be implemented. This way, the present document is not limit to any specific form of the combination of the hardware and software.

The above description is only the preferred embodiments of the present document and is not intended to limit the present document. For those skilled in the art, the present document can have various modifications and variations.

### Industrial Applicability

Based on the above technical scheme provided by the embodiment of the present document, the first device detects whether the first domain name which is requested to resolve by a domain name resolution request of the second device which is mounted beneath the first device is matched with a preset second domain name; the first device acquires an IP address corresponding to the first domain name from a response of a resolution request when the first domain name is matched with the second domain name; and sets an IP address in a rule entry corresponding to the second domain name as the IP address corresponding to the first domain name. Because the first device acquires the IP address corresponding to the domain name from the response of the resolution request, there is no need to know the IP addresses of all the websites in advance, and when the IP address of the website is changed, the rule entry can be updated in time.

## Claims

1. A method for setting a network rule entry, comprising:
detecting (S102), by a first device, whether a first domain name which is requested to resolve by a domain name resolution request of a second device is matched with a preset second domain name, wherein the second device is a device which is mounted beneath the first device;
acquiring (S104), by the first device, an IP address corresponding to the first domain name from a response of the resolution request when the first domain name is matched with the second domain name; and
setting (S106), by the first device, an IP address in a rule entry corresponding to the second domain name as the IP address corresponding to the first domain name,
**characterised in that**, the second domain name is composed of a wildcard character and a sub-domain name.

2. The method according to claim 1, wherein, the rule entry comprises a rule for selecting a network path.

3. The method according to claim 2, wherein, the network path is a wide area network, WAN, connection used for forwarding a data packet.

4. The method according to claim 1, after the first device sets the IP address in the rule entry corresponding to the second domain name as the IP address corresponding to the first domain name, further comprising:
receiving, by the first device, a network access request of the second device, wherein, the network access request carries an IP address to be accessed;
searching, by the first device, for a rule entry corresponding to the IP address to be assessed; and
when the rule entry corresponding to the IP address to be accessed is found, controlling, by the first device, network access according to the found rule entry.

5. The method according to claim 4, wherein, controlling, by the first device, the network access according to the found rule entry comprises:
selecting, by the first device, a specified WAN connection and sending a data packet according to the found rule entry.

6. An apparatus for setting a network rule entry, which is located in a first device, comprising:
a detection module (10), arranged to: detect whether a first domain name which is requested to resolve by a domain name resolution request of a second device is matched with a preset second domain name, wherein the second device is a device which is mounted beneath the first device;
an acquiring module (20), arranged to: acquire an IP address corresponding to the first domain name from a response of the resolution request when the first domain name is matched with the second domain name; and
a setting module (30), arranged to set an IP address in a rule entry corresponding to the second domain name as the IP address corresponding to the first domain name,
**characterised in that**, the second domain name is composed of a wildcard character and a sub-domain name.

7. The apparatus according to claim 6, wherein, the rule entry comprises a rule for selecting a network path.

8. The apparatus according to claim 7, wherein, the network path is a wide area network, WAN, connection used for forwarding a data packet.

9. The apparatus according to claim 6, further comprising:
a receiving module, arranged to: receive a network access request of the second device, wherein, the network access request carries an IP address to be accessed;
a searching module, arranged to: search for a rule entry corresponding to the IP address to be assessed; and
a controlling module, arranged to: when the rule entry corresponding to the IP address to be accessed is found, control network access according to the found rule entry.

10. The apparatus according to claim 9, wherein, the controlling module is arranged to select a specified WAN connection and send a data packet according to the found rule entry.

## Patentansprüche

1. Verfahren zum Einstellen einer Netzwerkregeleingabe, umfassend:
Feststellen (S102), durch eine erste Vorrichtung, ob ein erster Domänenname, dessen Auflösung durch eine Domänennamen-Auflösungsanforderung einer zweiten Vorrichtung angefordert wird, mit einem voreingestellten zweiten Domänennamen übereinstimmt, wobei die zweite Vorrichtung eine Vorrichtung ist, die unterhalb der ersten Vorrichtung eingebaut ist;
Erfassen (S104), durch die erste Vorrichtung, einer dem ersten Domänennamen entsprechenden IP-Adresse aus einer Antwort auf die Auflösungsanforderung, wenn der erste Domänenname mit dem zweiten Domänennamen übereinstimmt; und
Einstellen (S106), durch die erste Vorrichtung, einer IP-Adresse in einer Regeleingabe, die dem zweiten Domänennamen entspricht, als die IP-Adresse, die dem ersten Domänennamen entspricht,
**dadurch gekennzeichnet, dass** der zweite Domänenname sich aus einem Platzhalterzeichen und einem Unter-Domänennamen zusammensetzt.

2. Verfahren nach Anspruch 1, wobei die Regeleingabe eine Regel zur Auswahl eines Netzwerkpfades umfasst.

3. Verfahren nach Anspruch 2,
wobei der Netzwerkpfad eine Weitverkehrsnetz-(WAN)-Verbindung ist, die zur Weiterleitung eines Datenpakets verwendet wird.

4. Verfahren nach Anspruch 1, das, nachdem die erste Vorrichtung in der Regeleingabe die dem zweiten Domänennamen entsprechende IP-Adresse als die dem ersten Domänennamen entsprechende IP-Adresse eingestellt hat, ferner umfasst:
Empfangen, durch die erste Vorrichtung, einer Netzwerkzugriffsanfrage der zweiten Vorrichtung, wobei die Netzwerkzugriffsanfrage eine IP-Adresse trägt, auf die zugegriffen werden soll;
Suchen, durch die erste Vorrichtung, nach einer Regeleingabe, die der IP-Adresse entspricht, auf die zugegriffen werden soll; und
wenn die Regeleingabe, die der IP-Adresse entspricht, auf die zugegriffen werden soll, gefunden wurde, Steuern, durch die erste Vorrichtung, des Netzwerkzugangs entsprechend der gefundenen Regeleingabe.

5. Verfahren nach Anspruch 4, wobei das Steuern, durch die erste Vorrichtung, des Netzwerkzugangs entsprechend der gefundenen Regeleingabe umfasst:
Auswählen, durch die erste Vorrichtung, einer bestimmten WAN-Verbindung und Senden eines Datenpakets entsprechend der gefundenen Regeleingabe.

6. Vorrichtung zum Einstellen einer Netzwerkregeleingabe, die in einer ersten Vorrichtung angeordnet ist, umfassend:
ein Feststellmodul (10), das angeordnet ist, um festzustellen, ob ein erster Domänenname, dessen Auflösung durch eine Domänennamen-Auflösungsanforderung einer zweiten Vorrichtung angefordert wird, mit einem voreingestellten zweiten Domänennamen übereinstimmt, wobei die zweite Vorrichtung eine Vorrichtung ist, die unterhalb der ersten Vorrichtung eingebaut ist;
ein Erfassungsmodul (20), das angeordnet ist, um eine IP-Adresse zu erfassen, die dem ersten Domänennamen aus einer Antwort auf die Auflösungsanforderung entspricht, wenn der erste Domänenname mit dem zweiten Domänennamen übereinstimmt; und
ein Einstellmodul (30), das angeordnet ist, um in einer Regeleingabe eine dem zweiten Domänennamen entsprechende IP-Adresse als die dem ersten Domänennamen entsprechende IP-Adresse einzustellen,
**dadurch gekennzeichnet, dass** der zweite Domänenname sich aus einem Platzhalterzeichen und einem Unter-Domänennamen zusammensetzt.

7. Vorrichtung nach Anspruch 6, wobei die Eingaberegel eine Regel zum Auswählen eines Netzwerkpfades umfasst.

8. Vorrichtung nach Anspruch 7, wobei der Netzwerkpfad eine Weitverkehrsnetz-(WAN)-Verbindung ist, die zur Weiterleitung eines Datenpakets verwendet wird.

9. Vorrichtung nach Anspruch 6, weiter umfassend:
ein Empfangsmodul, das angeordnet ist, um eine Netzwerkzugriffsanfrage der zweiten Vorrichtung zu empfangen, wobei die Netzwerkzugriffsanfrage eine IP-Adresse trägt, auf die zugegriffen werden soll;
ein Suchmodul, das angeordnet ist, um nach einer Regeleingabe zu suchen, die der IP-Adresse entspricht, auf die zugegriffen werden soll; und
ein Steuermodul, das angeordnet ist, um dann, wenn die Regeleingabe, die der IP-Adresse entspricht, auf die zugegriffen werden soll, gefunden wurde, den Netzwerkzugang entsprechend der gefundenen Regeleingabe zu steuern.

10. Vorrichtung nach Anspruch 9, wobei das Steuermodul angeordnet ist, um eine bestimmte WAN-Verbindung auszuwählen und ein Datenpaket entsprechend der gefundenen Regeleingabe zu senden.

## Revendications

1. Procédé pour régler une entrée de règle de réseau, comprenant :
détecter (S102), par un premier dispositif, si un premier nom de domaine qu'il est demandé de résoudre par une demande de résolution de nom de domaine d'un deuxième dispositif est en correspondance avec un deuxième nom de domaine prédéfini, dans lequel le deuxième dispositif est un dispositif qui est monté sous le premier dispositif ;
acquisition (S104), par le premier dispositif, d'une adresse IP correspondant au premier nom de domaine à partir d'une réponse à la demande de résolution quand le premier nom de domaine est en correspondance avec le deuxième nom de domaine ; et
réglage (S106), par le premier dispositif, d'une adresse IP dans une entrée de règle correspondant au deuxième nom de domaine comme l'adresse IP correspondant au premier nom de domaine,
**caractérisé en ce que** le deuxième nom de domaine est composé d'un caractère de remplacement et d'un nom de sous-domaine.

2. Procédé selon la revendication 1, dans lequel, l'entrée de règle comprend une règle pour sélectionner un chemin de réseau.

3. Procédé selon la revendication 2,
dans lequel, le chemin de réseau est une connexion de réseau étendu, WAN, utilisée pour transmettre un paquet de données.

4. Procédé selon la revendication 1, après que le premier dispositif règle l'adresse IP dans l'entrée de règle correspondant au deuxième nom de domaine comme l'adresse IP correspondant au premier nom de domaine, comprenant en outre :
la réception, par le premier dispositif, d'une demande d'accès au réseau du deuxième dispositif, dans lequel, la demande d'accès au réseau transporte une adresse IP à laquelle accéder ;
la recherche, par le premier dispositif, d'une entrée de règle correspondant à l'adresse IP à laquelle accéder ; et
quand l'entrée de règle correspondant à l'adresse IP à laquelle accéder est trouvée, la commande, par le premier dispositif, d'un accès au réseau en fonction de l'entrée de règle trouvée.

5. Procédé selon la revendication 4, dans lequel, la commande, par le premier dispositif, de l'accès au réseau en fonction de l'entrée de règle trouvée comprend :
la sélection, par le premier dispositif, d'une connexion WAN spécifiée et l'envoi d'un paquet de données en fonction de l'entrée de règle trouvée.

6. Appareil pour régler une entrée de règle de réseau, qui est situé dans un premier dispositif, comprenant :
un module de détection (10), agencé pour: détecter si un premier nom de domaine qu'il est demandé de résoudre par une demande de résolution de nom de domaine d'un deuxième dispositif est en correspondance avec un deuxième nom de domaine prédéfini, dans lequel le deuxième dispositif est un dispositif qui est monté sous le premier dispositif ;
un module d'acquisition (20), agencé pour : acquérir une adresse IP correspondant au premier nom de domaine à partir d'une réponse à la demande de résolution quand le premier nom de domaine est en correspondance avec le deuxième nom de domaine ; et
un module de réglage (30), agencé pour régler une adresse IP dans une entrée de règle correspondant au deuxième nom de domaine comme l'adresse IP correspondant au premier nom de domaine,
**caractérisé en ce que** le deuxième nom de domaine est composé d'un caractère de remplacement et d'un nom de sous-domaine.

7. Appareil selon la revendication 6, dans lequel l'entrée de règle comprend une règle pour sélectionner un chemin de réseau.

8. Appareil selon la revendication 7, dans lequel le chemin de réseau est une connexion de réseau étendu, WAN, utilisée pour transmettre un paquet de données.

9. Appareil selon la revendication 6, comprenant en outre :
un module de réception, agencé pour : recevoir une demande d'accès au réseau du deuxième dispositif, dans lequel la demande d'accès au réseau transporte une adresse IP à laquelle accéder ;
un module de recherche, agencé pour : rechercher une entrée de règle correspondant à l'adresse IP à laquelle accéder ; and
un module de commande, agencé pour : quand l'entrée de règle correspondant à l'adresse IP à laquelle accéder est trouvée, commander un accès au réseau en fonction de l'entrée de règle trouvée.

10. Appareil selon la revendication 9, dans lequel, le module de commande est agencé pour sélectionner une connexion WAN spécifiée et envoyer un paquet de données en fonction de l'entrée de règle trouvée.
